(19) Europäisches Patentamt
European Patent Office
Office européen des brevets

(11) **EP 3 386 162 A1**

(12) **DEMANDE DE BREVET EUROPEEN**

(43) Date de publication:
**10.10.2018 Bulletin 2018/41**

(51) Int Cl.:
*H04L 29/06* (2006.01)        *H04W 4/70* (2018.01)
*H04W 12/02* (2009.01)       *H04W 12/04* (2009.01)
*H04W 12/08* (2009.01)

(21) Numéro de dépôt: **18165700.8**

(22) Date de dépôt: **04.04.2018**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **04.04.2017  FR 1752881**

(71) Demandeur: **Commissariat à l'énergie atomique
et aux énergies alternatives
75015 Paris (FR)**

(72) Inventeurs:
• **HENNEBERT, Christine
38054 Grenoble Cedex 9 (FR)**
• **MACABIES, Alexandre
38000 Grenoble (FR)**

(74) Mandataire: **Brevalex
56, Boulevard de l'Embouchure
B.P. 27519
31075 Toulouse Cedex 2 (FR)**

(54) **COMMUNICATION SÉCURISÉE DE BOUT EN BOUT POUR CAPTEUR MOBILE DANS UN RÉSEAU IOT**

(57)     L'invention concerne une méthode communication de bout en bout entre un capteur mobile et un utilisateur, le capteur mobile se déplaçant au sein d'un réseau WSN, le réseau WSN comprenant une pluralité de sous-réseaux reliés à Internet au moyen de passerelles. Lorsque le capteur mobile souhaite rejoindre un sous-réseau, il transmet une requête d'association à la passerelle du sous-réseau qui la relaie au serveur via Internet.

Ce dernier communique au capteur mobile et à la passerelle une clé de chiffrement temporaire sous forme chiffrée. La passerelle peut alors communiquer au capteur mobile la clé de sécurité du sous-réseau, par un message chiffré au moyen de la clé de chiffrement temporaire. Le capteur mobile peut alors communiquer avec la passerelle de manière sécurisée, au niveau liaison, au moyen de la clé de sécurité du sous-réseau.

FIG.4

EP 3 386 162 A1

**Description**

**DOMAINE TECHNIQUE**

L'objet de la présente invention concerne la sécurité dans le domaine de l'Internet des objets ou IoT (*Internet of Things*).

**ÉTAT DE LA TECHNIQUE ANTÉRIEURE**

L'apparition de technologies radio pervasives et à faible débit, adaptées à des objets autonomes et à faible consommation d'énergie, a permis récemment le développement de l'Internet des objets (IoT). L'IoT permet à un utilisateur d'accéder à des informations, encore dénommées ressources, issues de capteurs ou d'actionneurs, souvent distants et à faible autonomie. Le schéma retenu actuellement consiste à virtualiser ces ressources dans une passerelle (*gateway*) ou un serveur, connecté(e) à Internet ou à l'infrastructure.

La sécurité de bout en bout (*end-to-end*), c'est-à-dire de l'utilisateur à la ressource, est assurée en fait entre l'utilisateur et l'élément virtualisant la ressource d'une part et, d'autre part, entre l'élément virtualisant la ressource et la ressource elle-même.

La passerelle permet la continuité des communications entre le domaine du sous-réseau de capteurs et le domaine de l'Internet, en assurant l'interopérabilité des protocoles de communication. En revanche, elle ne garantit pas l'interopérabilité des protocoles de sécurité, d'où une discontinuité de sécurité au niveau de la passerelle.

En pratique, la passerelle héberge des clés de sécurité différentes qui assurent la confidentialité et l'intégrité d'une part avec l'utilisateur final côté Internet, et d'autre part avec le réseau de capteurs. Ces clés de sécurité sont fournies par un serveur situé dans le « Cloud », pouvant disposer en outre d'une liste des dispositifs autorisés à communiquer sur le réseau (*white list*).

La fourniture de clés de sécurité à la passerelle est bien adaptée aux cas où les capteurs sont des dispositifs fixes, autrement dit appartiennent à un seul et même sous-réseau au cours du temps. En revanche, lorsque ces capteurs sont mobiles et passent d'un sous-réseau à l'autre, en se connectant successivement à différentes passerelles lors de leur déplacement, la gestion de la sécurité des communications devient sensiblement plus complexe.

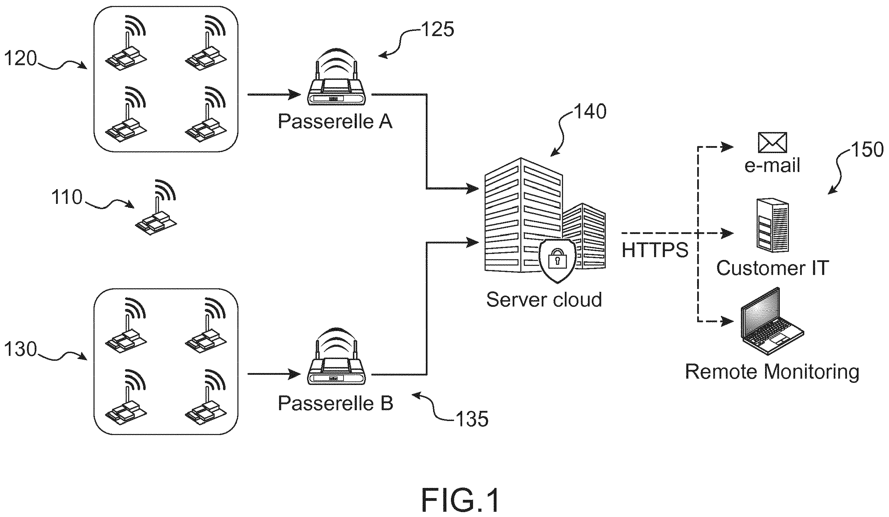

La situation d'un capteur se déplaçant dans un réseau WSN a été illustrée en Fig.1. On a représenté sur cette figure un capteur mobile, 110, se déplaçant d'un sous-réseau 120 à un autre sous-réseau 130. Le sous-réseau 120 (resp. 130) est relié à Internet via la passerelle 125 (resp. 135). La passerelle 125 (resp. 135) est elle-même en communication avec un serveur, 140, dit serveur « cloud » par une connexion IP sécurisée. L'accès d'un utilisateur, 150, à la ressource du capteur mobile 110 se fait via le serveur 140 et la passerelle, 125.

Le WSN peut être un réseau ZigBee ou encore un réseau LPWAN (Low Power Wide-Area Network), par exemple un réseau LoRaWAN (Long Range LPWAN).

Le standard ZigBee offre la possibilité de gérer la sécurité des communications au niveau de la couche réseau, encore dénommée NTW (ZigBee Network Layer) ou de la couche application, encore dénommée APS (ZigBee Application Sub-Layer). En revanche, le standard est silencieux sur la gestion de la sécurité au niveau de la couche liaison (IEEE 802.15.4 Physical Layer), $\alpha$ *fortiori* en situation de mobilité et sur la distribution des clés secrètes de sécurité.

Le protocole LoRaWAN ne prévoit pas davantage de gestion de la sécurité au niveau de la couche liaison (Lora MAC), ni de gestion des clés secrètes.

Il a cependant été proposé dans l'article de R. Miller intitulé « LoRa Security Building a secure LoRa solution » publié dans MWR Labs Whitepaper, une procédure pour distribuer les clés secrètes dans un réseau LoRa. En particulier, lorsqu'un capteur (noeud) souhaite rejoindre un tel réseau, il initie une procédure dite d'activation ou OTAA (Over-The-Air-Activation). On suppose que chaque noeud est équipé d'une clé secrète unique symétrique (AppKey). Cette procédure consiste en un échange de messages entre le noeud et le serveur via la passerelle. Elle débute par l'envoi d'une demande d'accès (*join request*) comprenant un entête MAC (MHDR), un identifiant du propriétaire du capteur (AppEUI), un identifiant du capteur (DevEUI) ainsi qu'un nonce (DevNonce) généré par le capteur. La demande d'accès est signée en hachant la demande d'accès au moyen de la clé secrète AppKey, cette signature servant de code d'authentification de message ou MIC (Message Integrity Code)

La demande d'accès ainsi signée est transmise au serveur du réseau LoRa qui vérifie l'authenticité du message au moyen de la clé AppKey. En cas de succès, le serveur cloud répond au capteur par un message d'acceptation (*join-accept*). Pour ce faire, le serveur génère un nouveau nonce (AppNonce) ainsi que deux clés secrètes NwkSKey (Network Session Key) et AppSKey (Application Session Key) correspondant respectivement à la couche réseau et à la couche application. Ces clés sont générées en chiffrant au moyen de la clé AppKey, une séquence de données obtenue par concaténation d'une valeur prédéterminée, du nonce généré par le serveur AppNonce, d'un identifiant du réseau LoRa, NetID, et du nonce généré par le capteur, DevNonce. Les clés ainsi générées sont transmises au capteur.

Le message d'acceptation comporte le nonce AppNonce, l'adresse du dispositif destinataire, DevAddr, ainsi que certains paramètres physiques. Le message est également signé au moyen de la clé AppKey. A la réception, le capteur déchiffre le message d'acceptation et vérifie le code MIC au moyen de la clé AppKey. En cas de succès, le capteur génère de son côté les clés NwkSKey et AppSKey à partir de la valeur AppNonce contenue dans le message d'acceptation.

Toutefois, la solution préconisée dans l'article de R. Miller précité n'est pas entièrement satisfaisante. En effet, l'entête d'une trame MAC (MHDR) du côté du réseau LoRa n'a pas à être connu au-delà de la passerelle, en particulier par le serveur cloud. Le serveur n'a donc pas la possibilité en pratique de vérifier l'authenticité de la requête d'accès. En outre, n'importe quel capteur peut se connecter au serveur cloud en empruntant n'importe quelle passerelle. Il n'y a donc pas de sécurité assurée au niveau liaison dans le sous-réseau, en aval de la passerelle LoRa.

Le but de la présente invention est par conséquent de proposer une méthode permettant de sécuriser efficacement la communication entre le capteur du réseau WSN et l'utilisateur, de bout en bout au niveau liaison, y compris lorsque le capteur est en situation de mobilité.

## EXPOSÉ DE L'INVENTION

La présente invention est définie par une méthode de communication sécurisée de bout en bout entre un capteur mobile et un utilisateur, le capteur mobile se déplaçant au sein d'un réseau WSN, ledit réseau WSN comprenant au moins un sous-réseau relié à Internet au moyen d'une passerelle, ladite passerelle étant connectée via Internet à un serveur gestionnaire dudit réseau WSN, dans laquelle, lorsque ledit capteur mobile transmet une requête d'association à la passerelle, celle-ci la relaie au serveur et :

- le serveur génère une clé de chiffrement temporaire et la communique sous forme chiffrée à la passerelle ainsi qu'au capteur;
- la passerelle transmet au capteur mobile, une clé de sécurité de sous-réseau destinée à sécuriser, au niveau liaison, les transmissions au sein du sous-réseau, ladite clé de sécurité de sous-réseau étant transmise au capteur mobile sous forme chiffrée par la clé de chiffrement temporaire ;
- ledit capteur mobile transmet à la passerelle un message d'acquittement, chiffré au moyen de ladite clé de sécurité de sous-réseau.

Le serveur dispose avantageusement d'une liste blanche contenant les identifiants des capteurs autorisés à se connecter via ladite passerelle, associés à leurs clés de sécurité respectives, ainsi que l'identifiant de ladite passerelle associé à sa clé de sécurité.

Le capteur mobile peut disposer d'un identifiant et de sa propre clé de sécurité, et pour former ladite requête d'association, il génère un nonce, ladite requête d'association étant obtenue en concaténant l'identifiant du capteur mobile, le nonce ainsi généré et d'une signature de l'identifiant et du nonce ainsi concaténés par la clé de sécurité du capteur mobile.

De préférence, sur réception de la requête d'association, le serveur, après avoir vérifié l'intégrité de la requête, chiffre la clé de chiffrement temporaire au moyen de la clé de sécurité de la passerelle pour générer un premier message et au moyen de la clé de sécurité du capteur mobile pour générer un second message, les premier et second messages étant respectivement transmis à la passerelle et au capteur mobile au niveau de la couche application.

Le premier message est obtenu de préférence en concaténant l'identifiant de la passerelle, l'identifiant du capteur mobile, le nonce et ladite clé de chiffrement temporaire pour former un premier ensemble d'informations concaténées, ledit premier ensemble d'informations concaténées étant chiffré au moyen de la clé de sécurité de la passerelle.

Avantageusement, le premier ensemble d'informations concaténées est signé au moyen d'une clé de signature de la passerelle et la signature est concaténée au premier ensemble d'informations concaténées précédemment chiffré au moyen de la clé de sécurité de la passerelle.

La clé de signature de la passerelle peut être choisie identique à la clé de sécurité de la passerelle.

Le second message est obtenu de préférence en concaténant l'identifiant de la passerelle, l'identifiant du capteur mobile, le nonce et ladite clé de chiffrement temporaire pour former un second ensemble d'informations concaténées, ledit second ensemble d'informations concaténées étant chiffré au moyen de la clé de sécurité du capteur mobile.

Avantageusement, le second ensemble d'informations concaténées est signé au moyen d'une clé de signature du capteur mobile et la signature ainsi obtenue est concaténée au second ensemble d'informations concaténées précédemment chiffré au moyen de la clé de sécurité du capteur mobile.

La clé de signature du capteur mobile peut être choisie identique à la clé de sécurité du capteur mobile.

La passerelle peut en outre transmettre au capteur un troisième message contenant la clé de sous-réseau chiffrée par la clé de chiffrement temporaire, le troisième message étant transmis au niveau application ou au niveau réseau.

Le troisième message contient alors une concaténation de l'identifiant de la passerelle, de l'identifiant du capteur mobile, du nonce et de la clé de sous-réseau.

Lorsque le serveur détecte qu'un capteur du sous-réseau ne répond plus aux requêtes du serveur, ou bien à intervalles de temps réguliers, le serveur peut générer une nouvelle clé de chiffrement temporaire, et la transmettre à chaque capteur appartenant au sous-réseau sous forme chiffrée par la clé de sécurité de ce capteur ou d'une clé de session précédemment échangée entre la passerelle et ce capteur.

Le serveur peut en outre transmettre à la passerelle une requête de renouvellement de la clé de sous-réseau à la passerelle ladite requête de renouvellement contenant la nouvelle clé de chiffrement temporaire, sous forme chiffrée par la clé de sécurité de la passerelle.

Enfin, lorsque la passerelle a reçu la requête de renouvellement du serveur, celle-ci peut générer une nouvelle clé de sous-réseau et la diffuser au capteur de sous-réseau sous la forme d'un message chiffré par la nouvelle clé de chiffrement temporaire.

## BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :

La Fig. 1, déjà décrite, représente schématiquement la situation d'un capteur se déplaçant au sein d'un réseau WSN ;
La Fig. 2 représente schématiquement les différentes couches de protocole intervenant dans une communication entre un utilisateur et un capteur dans la situation de la Fig. 1 ;
La Fig. 3 représente schématiquement la distribution de clés secrètes dans une méthode de communication sécurisée de bout en bout selon un mode de réalisation de l'invention ;
La Fig. 4 représente schématiquement un processus d'association sécurisé d'un capteur dans une méthode de communication sécurisée de bout en bout selon un mode de réalisation de l'invention ;
La Fig. 5 représente schématiquement un processus de renouvellement/ révocation de la clé de liaison dans une méthode de communication sécurisée de bout en bout selon un mode de réalisation de l'invention.

## EXPOSÉ DÉTAILLÉ DE MODES DE RÉALISATION PARTICULIERS

Nous considérons à nouveau un réseau WSN, c'est-à-dire un réseau de capteurs sans fil à sauts multiples (*multi-hop*) comme représenté en Fig. 1. Ce réseau obéit à un standard de l'Internet des objets ou IoT, il peut être par exemple un réseau ZigBee, un réseau 6LoWPAN ou encore un réseau LoRaWAN. Ce réseau comprend une pluralité de sous-réseaux, chaque sous-réseau étant relié à Internet au moyen d'une passerelle, chaque passerelle étant connectée au serveur (serveur cloud) gestionnaire du réseau.

Les capteurs du réseau WSN embarquent un système d'exploitation, tel que Contiki (version 3.x), permettant de gérer des clés de sécurité au niveau de la couche liaison (couche MAC) du modèle OSI. Chaque passerelle assure l'interopérabilité des protocoles de communication entre le réseau WSN et Internet. Elle héberge également un système d'exploitation permettant de gérer les clés de sécurité au niveau liaison, tel que par exemple un noyau Linux (version 4.4) pour communiquer de manière sécurisée avec le réseau de capteurs. L'utilisateur final accède aux ressources fournies par les capteurs via Internet.

On suppose que chaque capteur du réseau WSN est équipé d'une clé de sécurité (par exemple une clé symétrique de 128 bits) stockée dans une mémoire « morte » de type FLASH, ROM ou EPROM, si possible sécurisée. Dans la suite, nous noterons $AppK_U$ la clé sécurité appartenant au capteur ayant pour identifiant $Dev_U$. La clé de sécurité est une clé secrète au sens où elle n'est connue que du capteur $Dev_U$ et du serveur gestionnaire du réseau WSN. Elle est utilisée au niveau application dans les communications entre le capteur $Dev_U$ et le serveur, voire l'utilisateur final.

De même, chaque passerelle est identifiée par un identifiant et est équipée d'une clé de sécurité au niveau liaison. Cette clé de sécurité est une clé secrète dans la mesure où elle est connue seulement de la passerelle et des capteurs du sous-réseau qui y sont reliés. Dans la suite, on notera $LinSK_A$, la clé sécurité de la passerelle ayant pour identifiant $Gat_A$. Autrement dit, la clé de sécurité $LinSK_A$ assure la sécurité des communications (confidentialité, intégrité et authentification) au niveau liaison à l'intérieur du sous-réseau A.

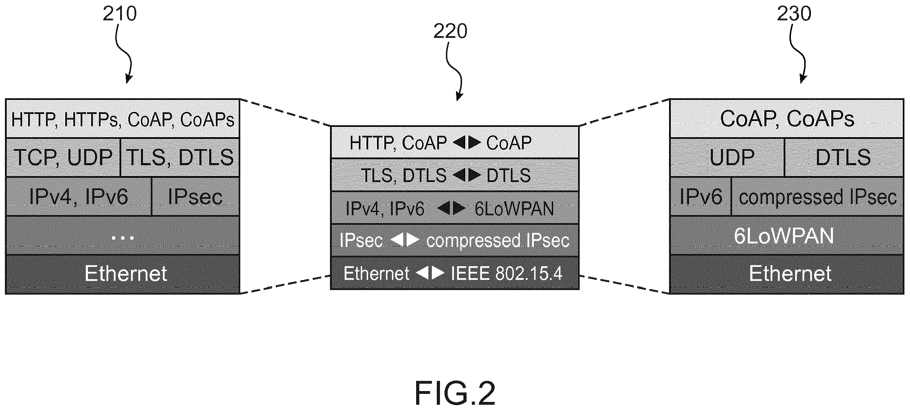

La Fig. 2 représente schématiquement les différentes couches de protocole intervenant dans une communication entre un utilisateur et un capteur dans la situation de la Fig. 1.

On a désigné en 210 la pile de protocole intervenant dans le domaine Internet (par exemple au niveau du serveur), en 220 la pile de protocole intervenant au niveau de la passerelle et en 230 la pile de protocole intervenant au niveau du réseau WSN (par exemple au niveau du capteur mobile).

On a supposé ici que la transmission dans le domaine Internet entre le serveur et la passerelle était réalisée par une liaison Ethernet (couche PHY et MAC) et que la transmission dans le réseau WSN était réalisée selon le protocole IEEE 802.15.4 (couches PHY et MAC). La transmission au niveau réseau se fait selon le protocole IPv4 ou IPv6 dans le domaine Internet et selon le protocole IPv6/ 6LoWPAN du côté du réseau WSN. La passerelle assure la conversion de protocole jusqu'au niveau réseau et est transparente pour les couches protocolaires supérieures.

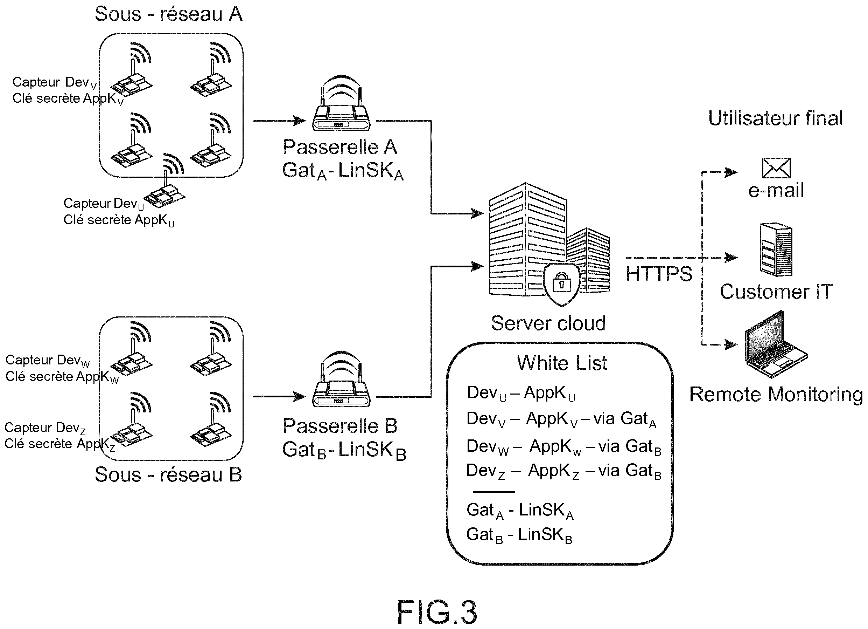

On a représenté sur la Fig. 3 la distribution de clés secrètes dans une méthode de communication sécurisée de bout en bout selon un mode de réalisation de l'invention.

Le capteur $Dev_V$ du sous-réseau A est équipé de la clé secrète $AppK_V$. De même, le capteur $Dev_U$ cherchant à rejoindre le sous-réseau A est équipé de la clé secrète $AppK_U$.

Les capteurs $Dev_W$ et $Dev_Z$ du sous-réseau B sont respectivement équipés des clés secrètes $AppK_W$ et $AppK_Z$.

Les passerelles $Gat_A$ et $Gat_B$ (ou de manière équivalente les sous-réseaux A et B) sont respectivement équipées de clés de sécurité $LinSK_A$ et $LinSK_B$.

Le serveur cloud, gestionnaire du réseau WSN, possède une liste blanche (*white list*) de couples d'identifiants des dispositifs autorisés et de leurs clés secrètes correspondantes. Dans le cas illustré, cette liste blanche comprend les identifiants des passerelles ($Gat_A, Gat_B$) respectivement associés à leurs clés de sécurité respectives ($LinSK_A, LinSK_B$) et, pour chaque passerelle (ou de manière équivalente pour chaque sous-réseau (A,B)), les identifiants des capteurs du sous-réseau en question associés à leurs clés de sécurité respectives. On notera en fait que l'entrée de la liste blanche relative à un capteur (par *exemple Dev_V*) d'un sous-réseau correspond à un triplet constitué de l'identifiant de ce capteur, de sa clé de sécurité ($AppK_V$) et de l'identifiant de la passerelle ($Gat_A$) du sous-réseau auquel il appartient. Autrement dit, une communication entre le capteur $Dev_V$ et le serveur ne sera autorisée et sécurisée avec la clé $AppK_V$ que dans la mesure où elle sera établie via la passerelle du sous-réseau dans lequel le capteur est enregistré. Dans le cas où le capteur est un capteur mobile, seul le couple de l'identifiant ($Dev_U$) et de sa clé de sécurité ($AppK_U$) est stocké dans la liste blanche du serveur.

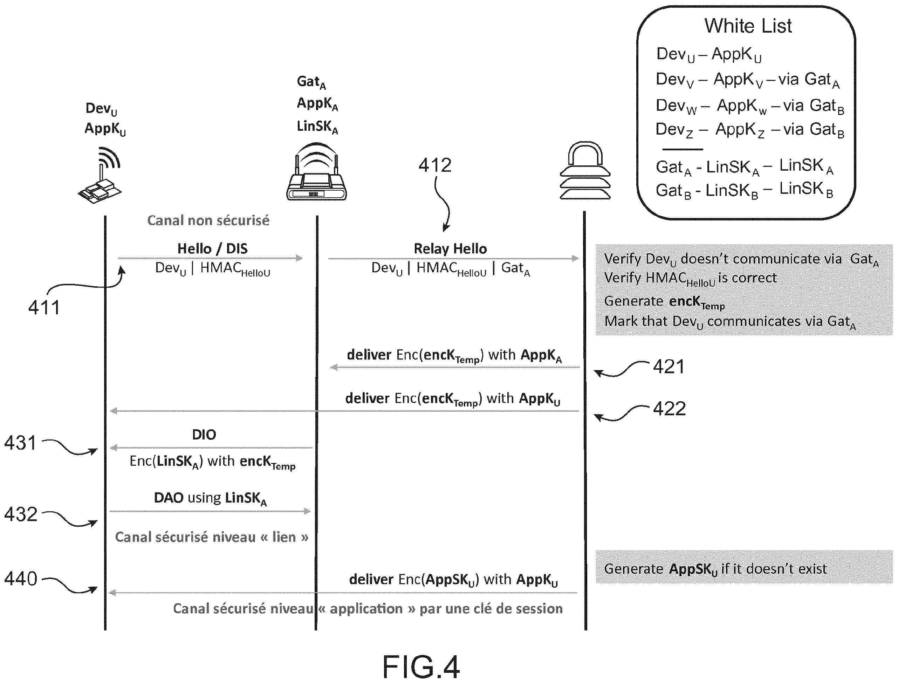

La Fig. 4 représente schématiquement un processus d'association sécurisé d'un capteur à un sous-réseau, dans le cadre d'un mode de réalisation de l'invention.

On suppose qu'un capteur mobile (par exemple $Dev_U$ dans la Fig. 3) souhaite rejoindre un sous-réseau sécurisé.

Le détail du processus d'association a été représenté en Fig. 4 dans le cas où le réseau WSN est conforme au standard ZigBee. Il est cependant clair à l'homme du métier que ce processus d'association s'applique de manière équivalente à un réseau 6LoWPAN ou un réseau LoRaWAN.

Dans une première phase, le capteur mobile $Dev_U$ se procure auprès du serveur une clé temporaire lui permettant de communiquer de manière sécurisée avec la passerelle du sous-réseau qu'il souhaite rejoindre.

Plus précisément, le capteur mobile $Dev_U$ transmet en 411 une requête d'association (message « *Hello* ») à la passerelle du sous-réseau, via un canal non sécurisé. Ce message, transmis au niveau de la couche application (APS dans le cas du protocole ZigBee), comprend une charge utile comprenant l'identificateur du capteur mobile, un nonce généré par ce dernier et une signature au moyen de sa clé de sécurité ($AppK_U$). La signature peut être par exemple un code d'authentification d'une empreinte cryptographique HMAC (*keyed-Hash Message Authentification Code*). Ainsi, la charge utile de la requête d'association est donnée par :

$$request_{APS-PLD} = Dev_U \big| DevNonce \big| HMAC\left(AppK_U, Dev_U \big| DevNonce\right) \quad (1)$$

où $HMAC(AppK_U, Dev_U|DevNonce)$ représente la signature de $Dev_U|DevNonce$ au moyen de clé de sécurité, $AppK_U$. Dans un mode de réalisation simplifié, on pourra omettre le nonce, auquel cas la requête d'association se réduit à $request_{APS-PLD} = Dev_U|HMAC(AppK_U, Dev_U)$.

A l'étape 412, la passerelle relaie la requête d'association au serveur gestionnaire du réseau en lui ajoutant son identifiant de passerelle, $Gat_A$. La charge utile $request_{APS-PLD}$ est en revanche relayée de manière transparente par la passerelle étant donné qu'elle se situe au niveau applicatif. Le message relayé par la passerelle au serveur peut être protégé par un chiffrement TLS.

A la réception du message ainsi relayé, l'intégrité et l'authenticité du message sont vérifiées par le serveur au moyen de la signature (HMAC). Plus précisément, le serveur calcule la signature de $Dev_U|DevNonce$ à partir de la clé de sécurité $AppK_U$ stockée dans sa liste et la compare avec la signature contenue dans la requête $request_{APS-PLD}$.

Le serveur vérifie en outre que le capteur $Dev_U$ demande bien à rejoindre le sous-réseau A , à partir de l'identifiant de la passerelle $Gat_A$, adjoint au message relayé.

Le serveur génère alors une clé de chiffrement temporaire, notée $EncK_{temp}$, destinée à sécuriser la communication entre le capteur et la passerelle. Cette clé temporaire est transmise d'une part à la passerelle $Gat_A$ et, d'autre part, au capteur $Dev_U$. Plus précisément, le serveur chiffre la clé temporaire $EncK_{temp}$ au moyen de la clé de sécurité de la passerelle, $AppK_A$ (contenue dans la liste blanche du serveur), et la transmet en 421 à la passerelle dans un premier message, *key-temp$^{GatA}$*. De même, le serveur chiffre la clé temporaire $EncK_{temp}$ au moyen de la clé de sécurité du capteur, $AppK_U$, (également contenue dans la liste blanche du serveur) et la transmet en 422 au capteur $Dev_U$, dans un second message $key\text{-}temp^{DevU}$. Les messages $key\text{-}temp^{GatA}$ et $key\text{-}temp^{DevU}$ sont transmis au niveau de la couche application (couche APS dans le cas de ZigBee).

De préférence, le serveur adjoint à la clé temporaire $EncK_{temp}$ contenue dans les messages $key\text{-}temp^{GatA}$ et $key\text{-}temp^{DevU}$, le nonce $DevNonce$ précédemment reçu dans la requête d'association du capteur, pour éviter les attaques par rejeu (*replay attack*), ainsi que les identifiants de la passerelle $Gat_A$ et du capteur $Dev_U$. Dans ce cas, la charge utile des premier et second messages peut s'exprimer comme suit :

$$key-temp_{APS-PLD}^{Gat_A} = Encrypt\left(AppK_A, Gat_A \middle| Dev_U \middle| DevNonce \middle| EncK_{temp}\right) \quad (2\text{-}1)$$

et

$$key-temp_{APS-PLD}^{Dev_U} = Encrypt\left(AppK_U, Gat_A \middle| Dev_U \middle| DevNonce \middle| EncK_{temp}\right) \quad (2\text{-}2)$$

où $Encrypt(AppK_A,X)$ et $Encrypt(AppK_U,X)$ représentent respectivement le chiffrement de $X$ par la clé de sécurité de la passerelle, $AppK_A$, et la clé de sécurité du capteur, $AppK_U$ et $X = Gat_A|Dev_U|DevNonce|EncK_{temp}$ désigne la concaténation des données $Gat_A$, $Dev_U$, $DevNonce$ et $EncK_{temp}$.

Le cas échéant, le serveur peut adjoindre à la charge utile $\left(key-temp_{APS-PLD}^{Gat_A}, \; key-temp_{APS-PLD}^{Dev_U}\right)$ une signature permettant d'assurer son intégrité, si le protocole de communication ne l'assure pas lui-même de manière intrinsèque. Par exemple, cette signature pourra être obtenue sous la forme d'un code HMAC, d'un code MAC (*Message Authentification Code*) ou d'un code MIC (*Message Integrity Code*). Dans le cas d'un code HMAC, les charges utiles des premier et second messages peuvent s'exprimer comme suit :

$$key-temp_{APS-PLD}^{Gat_A} = Encrypt\left(AppK_A, X\right) \middle| HMAC\left(AppK_A, X\right) \qquad (3\text{-}1)$$

$$key-temp_{APS-PLD}^{Dev_U} = Encrypt\left(AppK_U, X\right) \middle| HMAC\left(AppK_U \middle| X\right) \qquad (3\text{-}2)$$

A la réception, la passerelle $Gat_A$ et le capteur $Dev_U$ déchiffrent le contenu du premier et du second message au moyen de leurs clés de sécurité respectives, puis vérifient, le cas échéant, l'intégrité de la charge utile au moyen de la signature.

A ce stade, la passerelle $Gat_A$ et le capteur $Dev_U$ disposent d'une clé secrète commune partagée, $EncK_{temp}$ (typiquement de 128 bits), leur permettant d'établir un canal sécurisé entre eux, au niveau liaison.

Dans une seconde phase, la passerelle transmet au capteur mobile la clé de sécurité du sous réseau, cette transmission étant sécurisée par la clé de chiffrement temporaire, $EncK_{temp}$, préalablement fournie par le serveur à la passerelle et au capteur en question.

Plus précisément, à l'étape 431, la passerelle $Gat_A$ utilise la clé temporaire $EncK_{temp}$ pour transmettre au capteur $Dev_U$, la clé de sécurité du sous-réseau, $LinSK_A$. Comme indiqué précédemment, cette clé est destinée à protéger les transmissions au sein du sous-réseau A, au niveau de la couche liaison.

Plus précisément, la passerelle $Gat_A$ transmet l'information chiffrée $Encrypt(EncK_{temp},LinSK_A)$ au capteur $Dev_U$, soit dans la charge utile d'un message au niveau application, soit dans la charge utile d'un message au niveau réseau, de manière à ce qu'elle puisse être routée dans le sous-réseau (le cas échéant en plusieurs « hops ») jusqu'au capteur. Le message au niveau application est par exemple sous la forme d'un message de contrôle DIO (DODAG Information Object où DODAG signifie *Destination Oriented Direct Acyclic Graph*) du protocole de routage RPL. On rappelle que RPL spécifie un protocole de routage adapté aux besoins des communications IPv6 au-dessus des réseaux de faible puissance et avec perte.

Comme précédemment, la passerelle peut adjoindre à l'information chiffrée, $Encrypt(EncK_{temp},LinSK_A)$, le nonce $DevNonce$ ainsi que les identifiants de la passerelle $Gat_A$ et du capteur $Dev_U$.

Par exemple, si la transmission est effectuée au niveau applicatif, la charge utile peut s'exprimer sous la forme :

$$key_{APS-PLD}^{Gat_A} = Encrypt\left(EncK_{temp}, Gat_A \Big| Dev_U \Big| DevNonce \Big| LinSK_A\right) \qquad (4)$$

avec les mêmes conventions de notation que précédemment. L'inclusion de $Dev_U$ et $DevNonce$ dans la charge utile permet de tracer le processus, autrement dit d'indiquer que la clé de sous-réseau transmise à l'étape 431 fait bien suite à la requête d'association lancée par le capteur, évitant ainsi toute ambiguïté dans le cas où plusieurs capteurs rejoindraient simultanément le sous-réseau.

Le cas échéant, la passerelle $Gat_A$ peut adjoindre à la charge utile une signature (HMAC, MAC, MIC). Ainsi, lorsque la signature est une signature HMAC, la charge utile devient :

$$key_{APS-PLD}^{Gat_A} = Encrypt\left(EncK_{temp}, Y\right) \Big| HMAC\left(EncK_{temp}, Y\right) \qquad (5)$$

avec $Y = Gat_A|Dev_U|DevNonce|LinSK_A$.

Selon une variante, au lieu de transmettre une seule clé de sous-réseau $LinSK_A$, la passerelle pourra transmettre deux clés distinctes $LinSK_A^1$ et $LinSK_A^2$, l'une pour chiffrer les messages (au niveau liaison) et l'autre pour les signer.

Dans tous les cas, le capteur $Dev_U$ déchiffre la charge utile $key_{APS-PLD}^{Gat_A}$ du message au moyen de la clé temporaire $EncK_{temp}$ précédemment reçue, puis vérifie le cas échéant l'intégrité de la charge utile au moyen de la signature. Si le message est intègre, la clé de sécurité du sous réseau, $LinSK_A$, est stockée dans la mémoire vive du capteur.

Le capteur $Dev_U$ transmet ensuite en 432 un message d'acquittement à la passerelle, par exemple sous la forme d'un message de contrôle DAO (*Destination Advertisement Object*). Ce message d'acquittement est chiffré au moyen de la clé de sécurité du sous-réseau $LinSK_A$.

Lorsque le capteur se déplace d'un sous-réseau à l'autre, l'ancienne clé de sous-réseau stockée dans la mémoire vive du capteur est remplacée par la clé nouvelle transmise par la passerelle du sous-réseau qu'il vient de rejoindre.

Le processus décrit ci-dessus se répète pour chaque nouveau capteur qui rejoint le sous-réseau.

Si le capteur ne dispose pas encore de clé de session pour communiquer des données au niveau applicatif, le serveur cloud lui en envoie une en 440 qu'il conservera en mobilité. Cette clé, notée $AppSK_U$ en Fig. 4, est transmise au capteur de la même façon que la clé temporaire, $EncK_{temp}$. Le capteur la stocke alors dans sa mémoire vive et le serveur cloud la conserve dans sa liste blanche pour les échanges futurs.

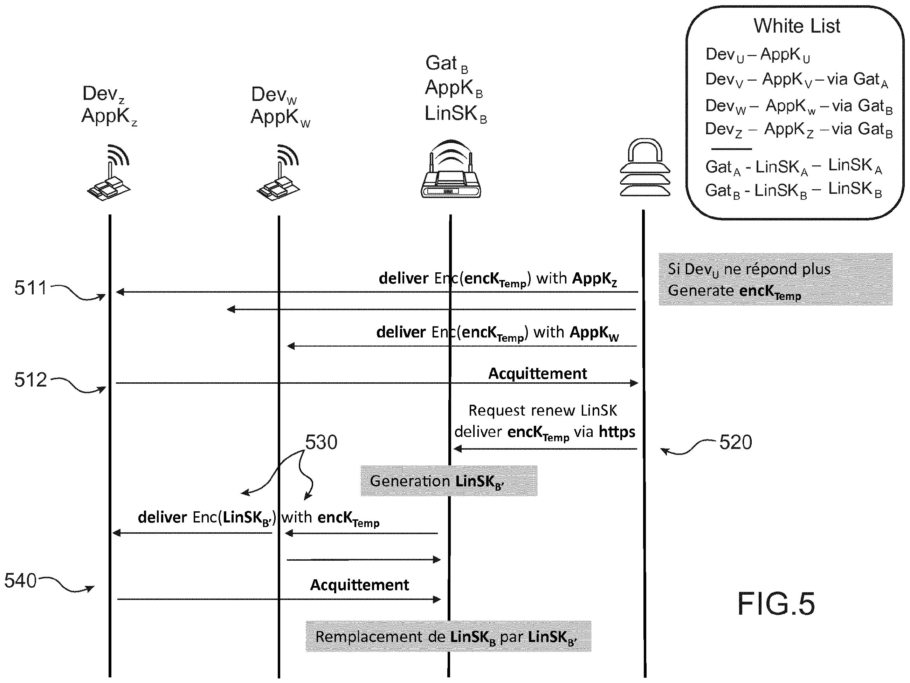

La Fig. 5 représente schématiquement un processus de renouvellement/ révocation de clé de sécurité de sous-réseau dans une méthode de communication sécurisée de bout en bout selon un mode de réalisation de l'invention.

Ce processus de renouvellement de la clé de sécurité de sous-réseau est lancé à intervalles réguliers ou bien sur survenance d'un évènement selon le degré de sécurité requis. Par exemple, il pourra être lancé à chaque fois qu'un capteur ne répond plus aux requêtes du serveur, soit que ce dernier ait quitté le sous-réseau, soit que sa batterie soit épuisée.

Le renouvellement de la clé de sécurité de sous-réseau a pour objet de parer une attaque qui consisterait à aller lire cette clé de sécurité dans la mémoire de l'un des capteurs.

Dans l'exemple illustré, on suppose que le serveur a détecté que le capteur mobile $Dev_U$ ne répond plus à ses requêtes. Il décide alors de renouveler la clé du sous-réseau $B$ auquel il était associé. Après renouvellement de cette clé, le capteur $Dev_U$ sera *de facto* écarté du sous-réseau dans la mesure où il ne possédera pas la nouvelle clé.

A l'étape 511, le serveur transmet à chaque capteur du sous-réseau $B$ (seuls deux capteurs $Dev_Z$ et $Dev_W$ de ce sous-réseau ont été représentés à titre d'exemple), une nouvelle clé temporaire $EncK_{temp}$'.

Cette nouvelle clé temporaire est transmise sous forme chiffrée à l'aide de la clé de sécurité du capteur ($AppK_W, AppK_Z$) ou de sa clé de session ($AppSK_W, AppSK_Z$).

Par exemple, le serveur transmet au capteur $Dev_W$ un message au niveau applicatif, $temp\_key^B$, contenant la charge utile suivante :

$$temp\_key_{APS-PLD}^{B} = Encrypt\left(AppK_W, Gat_B \Big| Dev_W \Big| AppNonce \Big| EncK_{temp}'\right) \qquad (6\text{-}1)$$

ou bien, lorsque la clé de session est utilisée :

$$temp\_key^B_{APS-PLD} = Encrypt\left(AppSK_W, Gat_B\big|Dev_W\big|AppNonce\big|EncK_{temp}'\right) \quad (6\text{-}2)$$

avec les mêmes conventions de notation que précédemment. En particulier, $X' = Gat_B|Dev_W|AppNonce|EncK_{temp}'$ représente la concaténation de l'identifiant de la passerelle $Gat_B$, de l'identifiant du capteur destinataire, $Dev_W$, d'un nonce généré par le serveur, $AppNonce,$ et de la clé temporaire $EncK_{temp}'$. Le nonce permet de tracer l'échange en étant repris ultérieurement dans le message d'acquittement du capteur $Dev_W$.

De préférence, le serveur adjoint à la charge utile une signature (HMAC, MAC, MIC). Ainsi, lorsque la signature est une signature HMAC, la charge utile devient :

$$temp\_key^B_{APS-PLD} = Encrypt\left(AppK_W, X'\right)\big|HMAC(AppK_W, X') \quad (7\text{-}1)$$

ou bien, lorsque la clé de session est utilisée :

$$temp\_key^B_{APS-PLD} = Encrypt\left(AppSK_W, X'\right)\big|HMAC(AppSK_W, X') \quad (7\text{-}2)$$

A la réception du message, le capteur déchiffre la charge utile au moyen de sa clé de sécurité $AppK_W$ ou de sa clé de session $AppSK_W$ et en vérifie l'intégrité au moyen de la signature. Il extrait de la charge utile la clé temporaire $EncK_{temp}$ et le nonce $AppNonce$.

A l'étape 512, chaque capteur du sous-réseau $B$ ayant reçu la clé temporaire $EncK_{temp}'$ transmet un message d'acquittement au serveur en y incorporant son identifiant et le nonce $AppNonce$ précédemment reçu. Ainsi, le message d'acquittement $ack\_new\_key^W$ renvoyé par le capteur contient la charge utile :

$$ack\_temp\_key^W_{APS-PLD} = Encrypt\left(AppK_W, ACK\big|Gat_B\big|Dev_W\big|AppNonce\right) \quad (8\text{-}1)$$

ou bien, lorsque la clé de session est utilisée :

$$ack\_temp\_key^W_{APS-PLD} = Encrypt\left(AppSK_W, ACK\big|Gat_B\big|Dev_W\big|AppNonce\right) \quad (8\text{-}2)$$

Là encore, le capteur peut adjoindre à la charge utile une signature (HMAC, MAC, MIC) pour permettre une vérification de l'intégrité du message d'acquittement par le serveur.

Une fois que le serveur a reçu tous les messages d'acquittement, il envoie en 520 à la passerelle $Gat_B$ une requête de renouvellement de la clé de sécurité du sous-réseau $B$, $renew\_key^B$. Cette requête contient la clé temporaire $EncK_{temp}'$ et peut être transmise via le protocole sécurisé https voire en chiffrant la charge utile avec la clé $AppK_B$.

La passerelle $Gat_B$ génère alors une nouvelle clé de sécurité de sous-réseau, $LinSK_B'$ et la diffuse en 530 aux capteurs du sous-réseau sous la forme d'un message chiffré par la clé temporaire $EncK_{temp}'$, $broadcast\_key^B$. Le message peut être transmis au niveau liaison, réseau ou application.

La charge utile du message diffusé par la passerelle $Gat_B$, $broadcast\_key^B$, peut s'exprimer sous la forme :

$$broadcast\_key^B = Encrypt\left(EncK_{temp}', Gat_B\big|LinSK_B'\right) \quad (9)$$

Le cas échéant, un nonce peut être généré par la passerelle et ajouté à l'argument du chiffrement pour les besoins de l'acquittement. En outre, la charge utile peut encore être signée, de manière à pouvoir vérifier son intégrité au niveau des capteurs, et notamment que la nouvelle clé $LinSK_B'$ est correcte.

La propagation du message $broadcast\_key^B$ dans le sous-réseau se fait par saut d'un capteur à l'autre.

Une fois que chaque capteur a reçu le message $broadcast\_key^B$, il en déchiffre le contenu et note la valeur de la nouvelle clé. Il renvoie alors en 540 un message d'acquittement à la passerelle $Gat_B$, puis procède au remplacement de sa clé de sécurité de sous-réseau stockée dans sa mémoire vive.

Une fois que la passerelle $Gat_B$ a reçu tous les acquittements, les communications entre les capteurs du sous-réseau *B* et le serveur (ou l'utilisateur final) peuvent reprendre.

En pratique, il y aura toujours des capteurs qui ne répondront pas. Il peut être envisagé de diffuser à nouveau le message *broadcast_key$^B$* au cas où ce message ou bien l'acquittement correspondant se serait perdu. Toutefois, si le capteur ne répond toujours pas au bout d'un nombre fixé de sollicitations, la clé de sécurité du sous-réseau est mise à jour pour tous les capteurs du sous-réseau ayant répondu par acquittement. Pour les autres, un processus sécurisé d'association pourra être initié lorsqu'ils seront prêts à rejoindre un sous-réseau.

Dans la description tant du processus d'association que du renouvellement de la clé de sécurité du sous-réseau, on a supposé que la clé de sécurité de la passerelle et la clé de sécurité du capteur mobile pouvaient servir non seulement au chiffrement des messages mais également à leur signature. Alternativement, la passerelle et/ou le capteur mobile pourront disposer chacun d'une clé de sécurité (pour le chiffrement) et d'une clé pour la signature. Les clés de sécurité et les clés de signature sont alors stockées dans la liste blanche du serveur en relation avec les identifiants des dispositifs (passerelle, capteur mobile) correspondants.

## Revendications

1. Méthode de communication sécurisée de bout en bout entre un capteur mobile et un utilisateur, le capteur mobile se déplaçant au sein d'un réseau WSN, ledit réseau WSN comprenant au moins un sous-réseau relié à Internet au moyen d'une passerelle, ladite passerelle étant connectée via Internet à un serveur gestionnaire dudit réseau WSN, **caractérisée en ce que** :

   - ledit capteur mobile dispose d'un identifiant (*Dev$_U$*) et de sa propre clé de sécurité (*AppK$_U$*), et forme une requête d'association en concaténant l'identifiant du capteur mobile et une signature de l'identifiant par la clé de sécurité du capteur mobile ;
   - ledit capteur mobile transmettant la requête d'association à la passerelle (411), celle-ci la relaie au serveur (412) ;
   - le serveur dispose d'une liste blanche contenant les identifiants des capteurs autorisés à se connecter via ladite passerelle, associés à leurs clés de sécurité respectives, ainsi que l'identifiant de ladite passerelle (*Gat$_A$*) associé à sa clé de sécurité, et vérifie l'authenticité et l'intégrité de la requête d'association du capteur mobile au moyen de ladite signature, et en cas de succès :
   - le serveur génère une clé de chiffrement temporaire (*EncK$_{temp}$*) et la communique sous forme chiffrée à la passerelle (421) ainsi qu'au capteur mobile (422);
   - la passerelle transmet (431) au capteur mobile, une clé de sécurité de sous-réseau destinée à sécuriser, au niveau liaison, les transmissions au sein du sous-réseau, ladite clé de sécurité de sous-réseau étant transmise au capteur mobile sous forme chiffrée par la clé de chiffrement temporaire ;
   - ledit capteur mobile transmet à la passerelle un message d'acquittement (432), chiffré au moyen de ladite clé de sécurité de sous-réseau.

2. Méthode de communication sécurisée de bout en bout selon la revendication 1, **caractérisée en ce que** pour former la requête d'association le capteur mobile génère en outre un nonce (*DevNonce*) et concatène l'identifiant du capteur mobile, le nonce ainsi généré et une signature de l'identifiant et du nonce ainsi concaténés par la clé de sécurité du capteur mobile.

3. Méthode de communication sécurisée de bout en bout selon la revendication 1 ou 2, **caractérisée en ce que**, sur réception de la requête d'association, le serveur, après avoir vérifié l'intégrité de la requête, chiffre la clé de chiffrement temporaire (*EncK$_{temp}$*) au moyen de la clé de sécurité de la passerelle (*AppK$_A$*) pour générer un premier message (*key-temp$^{Gat_A}$*) et au moyen de la clé de sécurité du capteur mobile pour générer un second message (*key-temp$^{Dev_U}$*), les premier et second messages étant respectivement transmis (421,422) à la passerelle et au capteur mobile au niveau de la couche application.

4. Méthode de communication sécurisée de bout en bout selon la revendication 3, **caractérisée en ce que** le premier message (*key-temp$^{Gat_A}$*) est obtenu en concaténant l'identifiant de la passerelle (*Gat$_A$*), l'identifiant du capteur mobile (*Dev$_U$*), le nonce (*DevNonce*) et ladite clé de chiffrement temporaire (*EncK$_{temp}$*) pour former un premier ensemble d'informations concaténées, ledit premier ensemble d'informations concaténées étant chiffré au moyen de la clé de sécurité de la passerelle (*AppK$_A$*).

5. Méthode de communication sécurisée de bout en bout selon la revendication 4, **caractérisée en ce que** le premier ensemble d'informations concaténées est signé au moyen d'une clé de signature de la passerelle et que la signature est concaténée au premier ensemble d'informations concaténées précédemment chiffré au moyen de la clé de sécurité de la passerelle ($AppK_A$).

6. Méthode de communication sécurisée de bout en bout selon la revendication 5, **caractérisée en ce que** la clé de signature de la passerelle est identique à la clé de sécurité de la passerelle.

7. Méthode de communication sécurisée de bout en bout selon la revendication 3, **caractérisée en ce que** le second message ($key\text{-}temp^{DevU}$) est obtenu en concaténant l'identifiant de la passerelle ($Gat_A$), l'identifiant du capteur mobile ($Dev_U$), le nonce ($DevNonce$) et ladite clé de chiffrement temporaire ($EncK_{temp}$) pour former un second ensemble d'informations concaténées, ledit second ensemble d'informations concaténées étant chiffré au moyen de la clé de sécurité du capteur mobile ($AppK_U$).

8. Méthode de communication sécurisée de bout en bout selon la revendication 7, **caractérisée en ce que** le second ensemble d'informations concaténées est signé au moyen d'une clé de signature du capteur mobile et que la signature ainsi obtenue est concaténée au second ensemble d'informations concaténées précédemment chiffré au moyen de la clé de sécurité du capteur mobile ($AppK_U$),

9. Méthode de communication sécurisée de bout en bout selon la revendication 8, **caractérisée en ce que** la clé de signature du capteur mobile est identique à la clé de sécurité du capteur mobile.

10. Méthode de communication sécurisée de bout en bout selon l'une des revendications 3 à 9, **caractérisée en ce que** la passerelle transmet au capteur un troisième message contenant la clé de sous-réseau ($LinSK_A$) chiffrée par la clé de chiffrement temporaire, le troisième message étant transmis au niveau application ou au niveau réseau.

11. Méthode de communication sécurisée de bout en bout selon la revendication 10, **caractérisée en ce que** le troisième message contient une concaténation de l'identifiant de la passerelle ($Gat_A$), de l'identifiant du capteur mobile ($Dev_U$), du nonce et de la clé de sous-réseau.

12. Méthode de communication sécurisée de bout en bout selon l'une des revendications précédentes, **caractérisée en ce que**, lorsque le serveur détecte qu'un capteur du sous-réseau ne répond plus aux requêtes du serveur, ou bien à intervalles de temps réguliers, le serveur génère une nouvelle clé de chiffrement temporaire ($EncK_{temp}'$), et la transmet (511) à chaque capteur ($Dev_Z, Dev_W$) appartenant au sous-réseau sous forme chiffrée par la clé de sécurité de ce capteur ($AppK_W, AppK_Z$) ou d'une clé de session ($AppSK_W, AppSK_Z$) précédemment échangée entre la passerelle et ce capteur.

13. Méthode de communication sécurisée de bout en bout selon la revendication 12, **caractérisée en ce que** le serveur transmet à la passerelle une requête de renouvellement de la clé de sous-réseau à la passerelle ($renew\_key^B$) ladite requête de renouvellement contenant la nouvelle clé de chiffrement temporaire ($EncK_{temp}'$), sous forme chiffrée par la clé de sécurité de la passerelle ($Gat_B$).

14. Méthode de communication sécurisée de bout en bout selon la revendication 13, **caractérisée en ce que**, lorsque la passerelle a reçu la requête de renouvellement du serveur, celle-ci génère une nouvelle clé de sous-réseau ($LinSK_B'$) et la diffuse au capteur de sous-réseau sous la forme d'un message chiffré ($broadcast\_key^B$) par la nouvelle clé de chiffrement temporaire ($EncK_{temp}'$).

FIG.1

210

220

230

| HTTP, HTTPs, CoAP, CoAPs | |
|---|---|
| TCP, UDP | TLS, DTLS |
| IPv4, IPv6 | IPsec |
| ... | |
| Ethernet | |

| HTTP, CoAP ◀▶ CoAP |
|---|
| TLS, DTLS ◀▶ DTLS |
| IPv4, IPv6 ◀▶ 6LoWPAN |
| IPsec ◀▶ compressed IPsec |
| Ethernet ◀▶ IEEE 802.15.4 |

| CoAP, CoAPs | |
|---|---|
| UDP | DTLS |
| IPv6 | compressed IPsec |
| 6LoWPAN | |
| Ethernet | |

FIG.2

Utilisateur final

e-mail

Customer IT

Remote Monitoring

HTTPS

Server cloud

White List

$Dev_U - AppK_U$
$Dev_V - AppK_V - via\ Gat_A$
$Dev_W - AppK_W - via\ Gat_B$
$Dev_Z - AppK_Z - via\ Gat_B$

$Gat_A - LinSK_A$
$Gat_B - LinSK_B$

Passerelle A
$Gat_A - LinSK_A$

Passerelle B
$Gat_B - LinSK_B$

Sous - réseau A

Capteur $Dev_V$
Clé secrète $AppK_V$

Capteur $Dev_U$
Clé secrète $AppK_U$

Sous - réseau B

Capteur $Dev_W$
Clé secrète $AppK_W$

Capteur $Dev_Z$
Clé secrète $AppK_Z$

FIG.3

White List

$Dev_U - AppK_U$

$Dev_V - AppK_V - via\ Gat_A$

$Dev_W - AppK_W - via\ Gat_B$

$Dev_Z - AppK_Z - via\ Gat_B$

$Gat_A - LinSK_A - LinSK_A$

$Gat_B - LinSK_B - LinSK_B$

$Dev_U$
$AppK_U$

$Gat_A$
$AppK_A$
$LinSK_A$

412

Canal non sécurisé

**Hello / DIS**
$Dev_U\ |\ HMAC_{HelloU}$

**Relay Hello**
$Dev_U\ |\ HMAC_{HelloU}\ |\ Gat_A$

411

Verify $Dev_U$ doesn't communicate via $Gat_A$
Verify $HMAC_{HelloU}$ is correct
Generate $encK_{Temp}$
Mark that $Dev_U$ communicates via $Gat_A$

**deliver** $Enc(encK_{Temp})$ with $AppK_A$
421

**deliver** $Enc(encK_{Temp})$ with $AppK_U$
422

**DIO**
$Enc(LinSK_A)$ with $encK_{Temp}$
431

**DAO** using $LinSK_A$
432

Canal sécurisé niveau « lien »

Generate $AppSK_U$ if it doesn't exist

**deliver** $Enc(AppSK_U)$ with $AppK_U$
440

Canal sécurisé niveau « application » par une clé de session

FIG.4

EP 3 386 162 A1

FIG.5

Europäisches
Patentamt

European
Patent Office

Office européen
des brevets

**RAPPORT DE RECHERCHE EUROPEENNE**

Numéro de la demande

EP 18 16 5700

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/263647 A1 (BARNETT BRUCE GORDON [US] ET AL) 23 octobre 2008 (2008-10-23) * figure 1 * * alinéas [0025], [0045], [0050] * * alinéas [0051], [0058], [0065] * ----- | 1-14 | INV. H04L29/06 H04W4/70 H04W12/02 H04W12/04 |
| A | EP 2 890 083 A2 (SAMSUNG ELECTRO MECH [KR]) 1 juillet 2015 (2015-07-01) * alinéas [0004] - [0006], [0013] - [0014] * ----- | 1-14 | ADD. H04W12/08 |
| A,D | Robert Miller: "MWR Labs Whitepaper Building a Secure LoRa Solution", , 22 mars 2016 (2016-03-22), XP055406415, Extrait de l'Internet: URL:https://labs.mwrinfosecurity.com/assets/BlogFiles/mwri-LoRa-security-guide-1.2-2016-03-22.pdf [extrait le 2017-09-13] * sections 2 et 2.1 diagramme 1 * ----- | 1-14 | |

DOMAINES TECHNIQUES RECHERCHES (IPC)

H04L
H04W

Le présent rapport a été établi pour toutes les revendications

| Lieu de la recherche | Date d'achèvement de la recherche | Examinateur |
|---|---|---|
| Munich | 3 août 2018 | Kufer, Léna |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 18 16 5700

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-08-2018

| Document brevet cité au rapport de recherche | Date de publication | Membre(s) de la famille de brevet(s) | Date de publication |
|---|---|---|---|
| US 2008263647 A1 | 23-10-2008 | US 2008263647 A1<br>WO 2008011376 A2 | 23-10-2008<br>24-01-2008 |
| EP 2890083 A2 | 01-07-2015 | EP 2890083 A2<br>KR 20150074515 A<br>US 2015180837 A1 | 01-07-2015<br>02-07-2015<br>25-06-2015 |

EPO FORM P0460

Pour tout renseignement concernant cette annexe : voir Journal Officiel de l'Office européen des brevets, No.12/82